Europäisches Patentamt

European Patent Office

Office européen des brevets

(11) Publication number: **0 267 364 B1**

## EUROPEAN PATENT SPECIFICATION

(45) Date of publication of patent specification: **01.04.92**   (51) Int. Cl.⁵: **G05D  16/16**, G05D 16/10, G05D 11/02

(21) Application number: **87109632.7**

(22) Date of filing: **04.07.87**

(54) **Automatic recirculation valve.**

(30) Priority: **03.11.86 US 926437**

(43) Date of publication of application:
**18.05.88 Bulletin  88/20**

(45) Publication of the grant of the patent:
**01.04.92 Bulletin  92/14**

(84) Designated Contracting States:
**DE NL**

(56) References cited:
**AT-B- 233 992**
**US-A- 4 019 527**
**US-A- 4 095 611**
**US-A- 4 512 358**

(73) Proprietor: **KEYSTONE INTERNATIONAL HOLDINGS CORP.**
**2625 Concord Pike P.O. Box 7138**
**Wilmington Delaware 19803(US)**

(72) Inventor: **Loos, George J.**
**726 W. Prospect Avenue**
**North Wales Pennsylvania 19454(US)**
Inventor: **Skovgaard, Ervin**
**48 Anvil Lane**
**Warrington Pennsylvania 18976(US)**

(74) Representative: **Berkenfeld, Helmut, Dipl.-Ing.**
**An der Schanz 2**
**W-5000 Köln 60(DE)**

## Description

The present invention relates to automatic recirculation valves. Particularly, the present invention relates to a back pressure control valve to control the change in pressure of fluids passing through said valve, said valve having an inlet opening and an outlet opening, means defining a valve seat adjacent the inlet opening, a generally cylindrical valve member within said valve movable axially toward and away from said valve seat, and means normally urging said valve member into engagement with said valve seat. The invention also relates to an automatic recirculating valve, for smoothly switching fluid flow between a main fluid artery and a recirculating fluid artery, having an inlet, a main outlet and a bypass outlet and a main valve element responsive to flow between said inlet and said main outlet, the recirculating valve including a bypass valve element controlling fluid flow between the inlet and the bypass outlet, means interconnecting the main valve element and the bypass valve element wherein flow through the bypass valve element is regulated by movement of the main valve element.

Bypass valves presently employed in recirculation control of pumping systems take primarily one of two forms. Conventional systems employ component valves within each line of the fluid system to control main flow, flow sensing, back pressure flow, and cascade flow to reduce high pressure energy. A more recent development has provided single flow control regulators which combine all these functions. Such a device is disclosed in US-A-4 095 611. The single flow control regulators greatly simplify the process of recirculation of fluid through continuously operating pumps and effectively avoid serious complications such as "water hammer".

A critical element in valves of this type is the bypass valve which controls the flow of high velocity fluid from the high pressure side of the pump to the low pressure return vessel. High velocity flow through the bypass valve combined with a large pressure drop across the bypass valve may cause severe cavitation and erosion of the bypass valve. It has been known to provide a restricted orifice in the return line from the bypass valve to the return vessel to limit the pressure drops across the bypass valve. This, however, only limits the cavitation and erosion problems at high rates of flow since the pressure drop across an orifice varies directly with the rate of flow and thus at low rates of flow the principal pressure drop is within the bypass valve. A valve arrangement for automatically relieving a pump having irregular consumption of a pressure medium is also known from US-A-4 019 527. This valve arrangement comprises a pressure-difference valve between the pump and the load and a bypass valve between the pump and the reservoir, wherein the pressure-difference valve acts on the bypass valve in the opening direction thereof by means of a stem when moved towards its seat, the bypass valve being biased in closing direction by a spring through a piston positioned in a pressure chamber, and the pressure chamber being connected with the inlet opening of the pressure difference valve through a passage, and wherein a pilot valve is positioned in the pressure chamber to connect same with the reservoir, the pilot valve being biased by a spring in closing direction, and the stem of the pressure-difference valve acting upon the pilot valve in opening direction, and a throttle being formed by the stem of the pressure-difference valve and the stem of the pilot valve in the passage between the pressure chamber and the inlet side of the pressure-difference valve.

Proceeding from this state of the art it is the underlying object of the invention to provide a back pressure control valve in which the pressure drop across the valve may remain relatively constant regardless of the rate of flow of fluid through the valve.

It is a further object of the present invention to provide a flow control regulator which controls main flow and bypass flow in a single unit of relatively simple construction and operation.

## SUMMARY OF THE INVENTION

The solution to the first mentioned object is provided by the invention in a control valve of the type as set forth above by means defining a generally cylindrical passage extending axially through said valve member from said valve seat in communication with said outlet opening, said valve member and valve seat cooperating to provide a decreasing pressure drop in the fluid passing across said valve seat with increasing rate of flow, and by means within said valve member passage providing a restriction to fluid flow through said passage to provide an increasing pressure drop in the fluid passing through said valve member passage with increasing rate of flow. Through use of fluid constrictions coordinated with the back pressure control valve element's spring controlled mechanism, change in fluid pressure relative to change in fluid flow is carefully constrained. The result is a relatively simple back pressure mechanism which maintains a relatively uniform back pressure on the bypass valve, dividing the pressure drop from the inlet to the return line uniformly throughout all rates of flow and thereby minimizing wear and cavitation within the bypass valve. Cavitation and erosion within the bypass valve is also minimized.

The valve seat of said back pressure control valves preferably includes a periphery portion outside the area of engagement between said valve member and said valve seat, said periphery portion containing at least one opening allowing fluid to pass therethrough. Means are provided within said valve member passage providing a restriction to fluid flow is an interior surface which is a smaller diameter at said outlet opening than it is at said inlet opening. The interior surface of said means forms a plurality of generally cylindrical passages connected by at least one generally frusto-conical portion. A spring forms the means normally urging said valve member into engagement with said valve seat.

The solution provided by the invention to the second object set forth above relating to the structure of an automatic recirculating valve is provided by inclusion of a back pressure control valve of the type as set forth above to control the fluid flow entering the recirculating fluid artery. This automatic recirculating valve has the unique ability to very smoothly switch between main flow and recirculation flow. This minimizes fluid surge and greatly decreases wear and maintenance within the regulator and throughout the fluid system.

## DESCRIPTION OF THE DRAWINGS

The operation of the present invention should become apparent from the following description when considered in conjunction with the accompanying drawings, in which:

Figure 1 is a perspective view of the exterior casing containing the present invention;

Figure 2 is a fragmentary view of a main valve element, a bypass valve element, and a back pressure control valve of the present invention;

Figure 3 is an enlarged sectional view of the back pressure control valve of the present invention;

Figure 4 is a planar view of a valve seat member of the back pressure control valve of the present invention;

Figure 5 is a graph depicting change in pressure versus change in flow through the back pressure control valve.

## DETAILED DESCRIPTION OF THE INVENTION

The present invention provides a valve for various applications, including bypass recirculation control in centrifugal pumping systems.

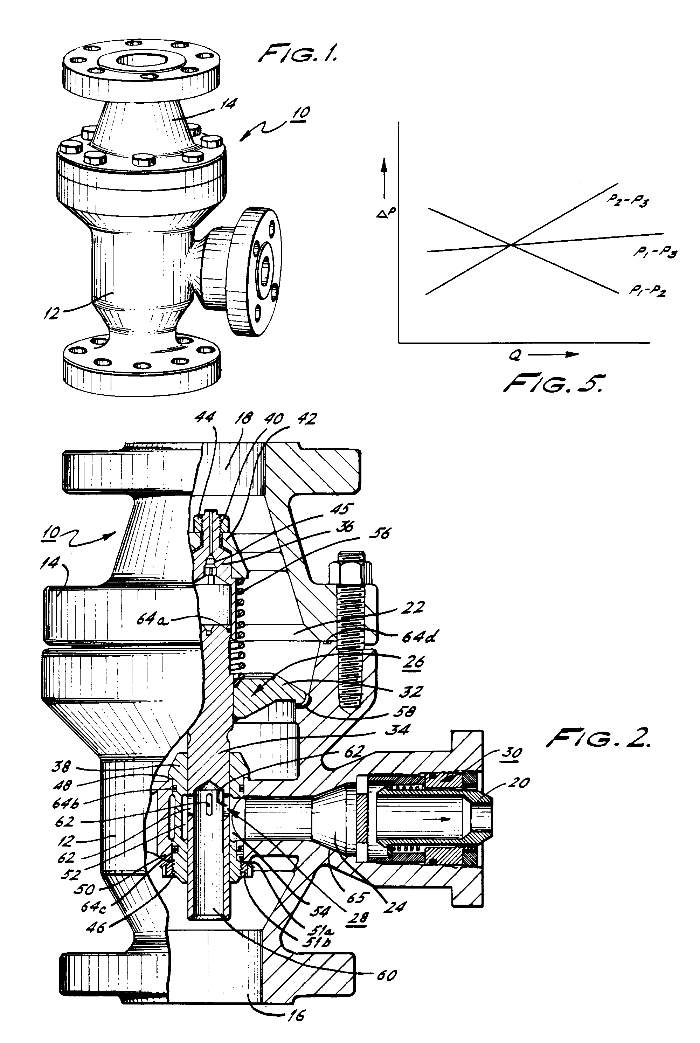

Illustrated in Figures 1 and 2 is a recirculation valve 10, which comprises a main body element 12 and a bonnet element 14. The recirculation valve 10 defines an inlet 16, a main outlet 18, a bypass outlet 20, a main flow cavity 22 extending between the inlet 16 and the main outlet 18, and a bypass cavity 24 extending between the main flow cavity 22 and the bypass outlet 20.

The recirculation valve contains three valve elements: a main valve element 26 positioned within the main flow cavity 22, the position of which is responsive to flow between the inlet 16 and the main outlet 18; a bypass valve element 28 positioned within the main flow cavity 22 and controlling flow between the inlet 16 and the bypass cavity 24; and a back pressure control valve 30 positioned within the bypass cavity 24 downstream of the supply valve element 28.

The main valve element 26 comprises a valve disc 32 attached substantially perpendicularly to, and intermediate the ends of, a main valve rod 34, said rod 34 positioned coaxially within the main flow cavity 22. The main valve rod 34 is retained in coaxial alignment with the main flow cavity 22 by insertion within an upper guide bushing 36 and through a bypass bushing 38 having an interior which is primarily cylindrical.

The upper guide bushing 36 includes a threaded end 40. The upper guide bushing 36 is positioned within the main flow cavity 22 via insertion of the threaded end 40 through a bushing cap 42 affixed to the bonnet element 14. A lock nut 44 is employed to attach to the threaded end 40 and anchor the upper guide bushing 36 within the bushing cap 42. The interior of the upper guide bushing 36 is adapted to permit vertical movement of the main valve rod 34 within the parameters set for movement of and flow through the disc valve in the main flow cavity 22. To this end a snubber orifice 45 is provided to permit displacement flow of fluid into and out of the interior of the upper guide bushing 36.

The bypass bushing 38 includes a threaded end 46 and an annular flange end 48. The bypass bushing 38 is adapted to fit snugly within a bypass valve juncture 50 affixed to the main body element 12. The bypass bushing 38 is held in place by a lock washer 51a and a lock nut 51b attached to threaded end 46. The bypass bushing 38 contains a medial cavity 52 having a medial port 54 communicating the medial cavity 52 and the bypass cavity 24.

A main spring 56 is provided extending between the valve disc 32 and the bushing cap 42. The main spring 56 is sized so to maintain the valve disc 32 in a closed position against an annular main valve disc seat 58 when there is no demand for fluid flow through the main outlet 18.

The bypass valve element 28 is housed in a cylindrical passage 60 within the lower portion of the main valve rod 34. At the uppermost portion of the passage 60 is a series of four orifices 62. The orifices 62 are positioned so to communicate the passage 60 and the medial cavity 52 when the main valve element 26 is in its lowermost position with the valve disc 32 sealed against the main valve seat 58.

When there is a demand for fluid downstream of the main outlet 18, as for example in a steam generating system supplied by the centrifugal pump, fluid flow through the valve moves the valve disc 32 away from the main valve seat 58. This moves the main valve rod 34 upward, causing the bypass bushing 38 to progressively seal off the orifices 62. As full flow through the main valve element 26 is approached, the orifices are positioned so that no communication occurs between the passage 60 and the medial cavity 52.

O-rings 64a, 64b, 64c, 64d are positioned at critical places throughout the valve 10 to assure proper seals and correct fluid flow.

The back pressure valve control 30 shown in Figures 2, 3 and 4 contributes extensively to the smooth operation of the present invention and protects the bypass valve from cavitation and erosion. The bypass cavity 24 comprises a number of different sized cylindrical portions arranged in a progressively increasing stepped fashion between a relatively narrow cylindrical portion abutting the medial port 54 and a relatively wide cylindrical portion comprising the bypass outlet 20. The cylindrical portions are connected by way of a sloping frusto-conical portion 65.

In the illustrated embodiment of the present invention, the back pressure control valve 30 is positioned within the bypass cavity 24 to further control the recirculating fluid. If desired, however, it may be placed in the return line (not shown) to the low pressure return vessel or to the pump. The back pressure control valve 30 comprises: a back pressure control valve seat 66 attached to a lower sleeve casing 68; an upper sleeve casing 70; an outside threaded nut 72 adapted to be screwed into the main body element 12 and secure the back pressure control valve 30 within the bypass cavity 24; a spring-controlled valve sleeve 74; a back pressure control valve spring 76; and a washer 78 surrounding the valve sleeve 74, abutting a lip 80 on the upstream end of the valve sleeve 74, and retaining the back pressure control valve spring 76 between the lip 80 and the upper sleeve casing 70. Seals 82a, 82b are provided to assure proper fluid flow.

The interior of the valve sleeve comprises two cylindrical portions -- a relatively wide portion on the upstream portion of the valve sleeve 74 and a relatively narrow portion serving as a pressure reducing orifice 84. A frusto-conical transition 86 is provided intermediate the two cylindrical portions.

When the bypass valve element 28 is closed, providing no bypass flow, the back pressure control valve 30 is likewise in a closed position with the valve sleeve 74 held against the back pressure control valve seat 66 through the action of the back pressure control valve spring 76. As the bypass valve element 28 begins to open, fluid flow through the bypass cavity 24 will exert pressure against the valve sleeve 74 thus compressing the back pressure control valve spring 76. The pressure will displace the valve sleeve 74 from the back pressure control valve seat 66 and permit some fluid to flow through the valve sleeve 74 and out the exit port 84. When the bypass valve element 28 is fully open, the valve sleeve 74 will be extended somewhat outside the bypass outlet 20, as is shown in Figure 2, thus permitting full bypass fluid flow. The closing of the supply valve element 28 causes the process to be reversed, with a steady closing of the valve sleeve 74 against the back pressure control valve seat 66.

The sizing of the various components of the present invention, including the valve sleeve 74, the back pressure control valve seat 66, the back pressure control valve spring 76, and the restricted orifice 84, can be used to control the change in pressure through the back pressure control valve 30 with change in flow through the valve 30. Theoretically, little or no change in pressure with change in flow through the back pressure valve is desired. However, for stability, a slight increase in pressure with increase in flow is preferred. The present invention readily achieves this ideal.

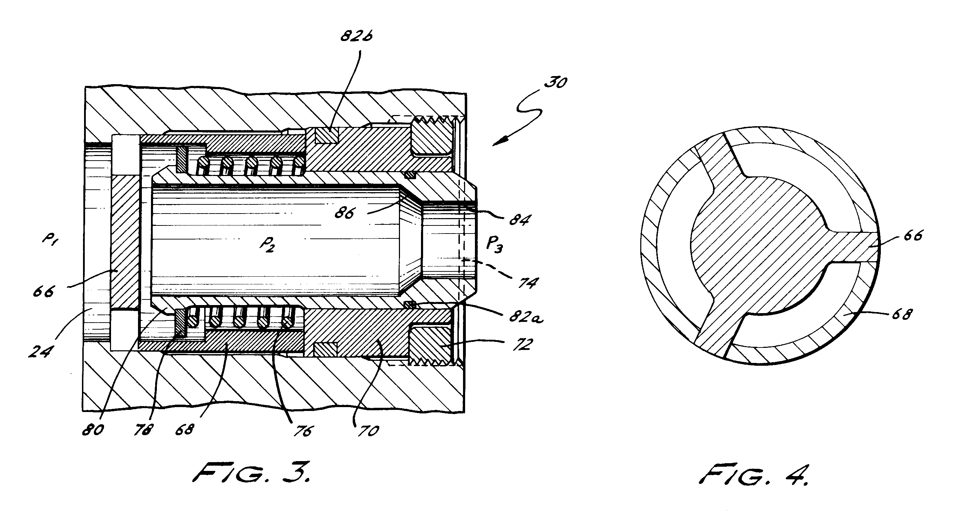

The net effect desired and achieved by the present invention is shown in the graph of Figure 5 wherein the "y" axis is change in pressure ($\Delta P$) and the "x" axis is the change in flow (Q). The present invention provides a steadily decreasing change in pressure with increasing flow between positions $P_1$ and $P_2$ on Figure 3 and steadily increasing change in pressure with increasing flow between positions $P_2$ and $P_3$ on Figure 3. Properly sized components nearly balance out these forces to provide only slightly increasing overall pressure changes between $P_1$ and $P_3$ with increasing flow through the back pressure control valve 30. With this construction, the pressure drop from the main inlet to the low pressure return vessel is divided at a relatively uniform ratio between the bypass valve and the back pressure control valve throughout all rates of flow of the fluid passing through the bypass.

## Claims

1. Back pressure control valve (30) to control the change in pressure of fluids passing through said valve, said valve having an inlet opening and an outlet opening, means defining a valve seat (66) adjacent the inlet opening, a generally cylindrical valve member (74) within said valve (30) movable axially toward and away from said valve seat (66), and means (76, 78) normally urging said valve member into engagement with said valve seat (66), characterized by means defining a generally cylindrical passage extending axially through said valve member (74) from said valve seat (66) in communication with said outlet opening, said valve member (74) and valve seat (66) cooperating to provide a decreasing pressure drop in the fluid passing across said valve seat (66) with increasing rate of flow, and by means (84) within said valve member passage providing a restriction to fluid flow through said passage to provide an increasing pressure drop in the fluid passing through said valve member passage with increasing rate of flow.

2. Valve according to claim 1, characterized in that said valve seat (66) includes a periphery portion outside the area of engagement between said valve member (74) and said valve seat (66), said periphery portion containing at least one opening allowing fluid to pass therethrough.

3. Valve according to claim 1, characterized in that said means (84) within said valve member passage providing a restriction to fluid flow is an interior surface which is a smaller diameter at said outlet opening than it is at said inlet opening.

4. Valve according to claim 3, characterized in that said interior surface forms a plurality of generally cylindrical passages connected by at least one generally frusto-conical portion (86).

5. Valve according to claim 1, characterized in that said means normally urging said valve member (74) into engagement with said valve seat (66) is a spring (76).

6. Automatic recirculating valve, for smoothly switching fluid flow between a main fluid artery and a recirculating fluid artery, having an inlet (16), a main outlet (18) and a bypass outlet (20) and a main valve element (26) responsive to flow between said inlet (16) and said main outlet (18), the recirculating valve including a bypass valve element (28) controlling fluid flow between the inlet (16) and the bypass outlet, means (34) interconnecting the main valve element (26) and the bypass valve element (28) wherein flow through the bypass valve element (28) is regulated by movement of the main valve element (26), characterized by including a back pressure control valve (30) according to any one of claims 1 to 5, said control valve (30) controlling the fluid flow entering the recirculating fluid artery.

## Revendications

1. Soupape de réglage de contre-pression (30) destinée à maîtriser la variation de la pression du fluide traversant la soupape, cette soupape comportant un orifice d'entrée et un orifice de sortie, un moyen formant un siège de soupape (66) à proximité de l'orifice d'entrée, un obturateur (74) généralement cylindrique dans la soupape (30) mobile axialement vers et depuis le siège de soupape (66), et un moyen (76, 78) pour solliciter normalement l'obturateur de soupape en contact avec le siège de soupape (66), caractérisée par des moyens définissant un passage généralement cylindrique qui s'étend axialement à travers l'obturateur de soupape (74) à partir du siège de soupape (66) en communication avec l'orifice de sortie, l'obturateur de soupape (74) et le siège de soupape (66) coopérant pour produire, dans le fluide qui franchit le siège de soupape (66), une perte de charge qui décroit à mesure que le débit augmente, et par un moyen (84), dans le passage de l'obturateur de soupape, formant un étranglement pour l'écoulement du fluide à travers ce passage afin de produire dans le fluide traversant le passage de l'obturateur une perte de charge qui croît à mesure que le débit augmente.

2. Soupape suivant la revendication 1, caractérisée en ce que le siège de soupape (66) comprend une partie périphérique à l'extérieur de la zone de contact entre l'obturateur de soupape (74) et le siège de soupape (66), cette partie périphérique contenant au moins une ouverture livrant passage au fluide.

3. Soupape suivant la revendication 1, caractérisée en ce que le moyen (84) dans le passage de l'obturateur de soupape formant un étranglement pour l'écoulement du fluide est une surface intérieure qui présente un diamètre plus petit au niveau de l'orifice de sortie qu'à celui de l'orifice d'entrée.

4. Soupape suivant la revendication 3, caractérisée en ce que la surface intérieure forme une pluralité de passages généralement cylindriques raccordés par au moins une partie généralement tronconique (86).

5. Soupape suivant la revendication 1, caractérisée en ce que le moyen qui sollicite normalement l'obturateur de soupape (74) en contact avec le siège de soupape (66) est un ressort (76).

6. Valve de recirculation automatique destinée à commuter sans à-coups l'écoulement du fluide entre une voie de fluide principale et une voie de fluide de recirculation, comportant une entrée (16), une sortie principale (18) et une sortie de dérivation (20) et un élément obturateur principal (26) réagissant à l'écoulement entre l'entrée (16) et la sortie principale (18), la valve de recirculation comprenant un élément obturateur de dérivation (28) commandant l'écoulement du fluide entre l'entrée (16) et la sortie de dérivation, un moyen (34) reliant l'élément obturateur principal (26) et l'élément obturateur de dérivation (28), l'écoulement par l'élément obturateur de dérivation (28) étant réglé par un déplacement de l'élément obturateur principal (26), caractérisée en ce qu'elle comprend une soupape de réglage de contrepression (30) suivant l'une quelconque des revendications 1 à 5, cette soupape (30) maîtrisant l'écoulement du fluide entrant dans la voie de fluide de recirculation.

## Patentansprüche

1. Rückdruck-Regelventil (30) zum Regeln von Änderungen im Druck des durch das Ventil durchtretenden Arbeitsmittels, wobei das Ventil eine Einlaß- und eine Auslaßöffnung aufweist, Mittel an der Einlaßöffnung einen Ventilsitz (66) bilden, ein allgemein zylinderförmiges Ventilglied (74) im Ventil (30) axial in Richtung auf den Ventilsitz (66) und von diesem weg verschiebbar ist und Mittel (76, 78) das Ventilglied normalerweise in Anlage mit dem Ventilsitz (66) drücken, gekennzeichnet durch Mittel, die einen allgemeinen zylinderförmigen, axial durch das Ventilglied (74) vom Ventilsitz (66) in Verbindung mit der Auslaßöffnung verlaufenden Durchgang bilden, wobei das Ventilglied (74) und der Ventilsitz (66) zum Bewirken eines mit ansteigender Strömungsgeschwindigkeit abnehmenden Druckabfalles des durch den Ventilsitz (66) strömenden Arbeitsmittels zusammenarbeiten, und durch ein Mittel (84) in dem Ventilglieddurchgang zum Ausbilden einer Verengung gegenüber der Arbeitsmittelströmung durch den Durchgang zum Bewirken eines mit ansteigender Strömungsgeschwindigkeit ansteigenden Druckabfalles in dem durch den Ventilglieddurchgang durchtretenden Arbeitsmittel.

2. Ventil nach Anspruch 1, dadurch gekennzeichnet, daß der Ventilsitz (66) einen Umfangsabschnitt außerhalb der Anlagefläche zwischen dem Ventilglied (74) und dem Ventilsitz (66) aufweist und der Umfangsabschnitt mindestens eine den Durchtritt von Arbeitsmittel zulassende Öffnung aufweist.

3. Ventil nach Anspruch 1, dadurch gekennzeichnet, daß das in dem Ventilglieddurchgang eine Verengung für die Arbeitsmittelströmung bildende Mittel (84) eine Innenfläche ist, die an der Auslaßöffnung einen kleineren Durchmesser als an der Einlaßöffnung aufweist.

4. Ventil nach Anspruch 3, dadurch gekennzeichnet, daß die Innenfläche mehrere durch mindestens einen allgemein kegelstumpfförmigen Abschnitt (86) verbundene, allgemein zylinderförmige Durchgänge ausbildet.

5. Ventil nach Anspruch 1, dadurch gekennzeichnet, daß das das Ventilglied (74) normalerweise mit dem Ventilsitz (66) in Anlage drückende Mittel eine Feder (76) ist.

6. Automatisches Umwälzventil zum glatten Umschalten der Arbeitsmittelströmung zwischen einem Arbeitsmittelhauptweg und einem Arbeitsmittelumwälzweg mit einem Einlaß (16), einem Hauptauslaß (18) und einem Bypassauslaß (20) und einem auf die Strömung zwischen dem Einlaß (16) und dem Hauptauslaß (18) ansprechenden Hauptventilelement (26), wobei das Umwälzventil ein die Arbeitsmittelströmung zwischen dem Einlaß (16) und dem Bypassauslaß steuerndes Bypassventilelement (28) aufweist, und mit einem Mittel (34) zum Verbinden des Hauptventilelements (26) mit dem Bypassventilelement (28), wobei die Strömung durch dieses durch die Bewegung des Hauptventilelementes (26) reguliert wird, gekennzeichnet durch den Einschluß eines Rückdruck-Regelventils (30) nach irgendeinem der Ansprüche 1 bis 5, wobei das Regelventil (30) die in den Arbeitsmittelumwälzweg eintretende Arbeitsmittelströmung steuert.

EP 0 267 364 B1

FIG.1.

FIG.5.

FIG.2.

7

FIG. 3.

FIG. 4.

EP 0 267 364 B1